# EUROPEAN PATENT APPLICATION

(11) **EP 1 944 942 A1**
(43) Date of publication of application: **16.07.2008**
(21) Application number: 07300729.6
(22) Date of filing: 15.01.2007
(51) Int. Cl.: H04L 29/06

(54) **Method for checking the running configuration of a network equipment and network equipment**

(71) Applicant: Alcatel Lucent, 75008 Paris (FR)
(72) Inventor: Clevy, Laurent, 28000 Chartres (FR); Marquet, Bertrand, 92350 Le Plessis Robinson (FR); Dubus, Samuel, 75014 Paris (FR)
(74) Representative: Schneider, Sandra

(57) **Abstract**

The present invention relates to a network equipment (100) comprising a trusted computing environment (110). The trusted computing environment (110) provides isolation to allow some process to run in a complete and separate environment from other processes and to securely store sensitive and confidential data. The invention also relates to a method for checking the running configuration of a network equipment (100). The trusted computing environment (110) comprises first message digests (125, 135), that first message digests (125, 135) being message digests of at least part of code (121) and data (131) of a validated configuration of the network equipment (100). Second message digests are calculated of at least part of code (120) and data (130) of a running configuration of the network equipment (100). Within the trusted computing environment (110) the running configuration of the network equipment (100) is checked using the first message digests (125, 135) and the second message digests.

## Description

### BACKGROUND OF THE INVENTION

The present invention relates to a network equipment comprising a trusted computing environment and a method for checking the running configuration of the network equipment.

A network equipment with a trusted computing environment is described in the United States Patent Application Publication US 2005/0257047 A1. The trusted computing environment comprises a mechanism to control security functionality of the network equipment and provides secure access to sensitive and confidential data and provides isolation to allow some process to run in a complete separate environment from another process.

In the European Patent Application EP 1179915 A2 a router of a communication network is described which comprises a microprocessor card. At boot time of the router configuration data is loaded into the router from the microprocessor card.

In the International Patent Application WO 03/026255 A1 the configuration of a network equipment at boot time is described. Configuration data for the network equipment is loaded at boot time from a small storage device.

In WO 02/084942 A1 an appliance protector residing within a network component is described, which protects the network component by monitoring processes for a valid signature.

In WO 94/10778 messages of a client-server communication are authenticated using message digests.

A Java smart card is an example of a trusted computing environment that is under study at the IETF (The Internet Engineering Task Force) and the smart card forum. The studies include the inclusion of an Internet protocol stack inside such a card. Attacks occur to communication networks and are often focused on the telecommunication infra structure itself. For the example of an internet protocol communication network, attacks are often focused on routers. On the other hand more communication systems including communication systems involved in critical infra structures e. g. energy, emergency or defense have converged to internet protocol. Most of current routers are protected by a set of administrator authentication for example a login and a password. If the administrator's password is corrupted or has been cracked the attacker has a full control of the network equipment. For example, the configuration can be changed and this can not usually be detected by the network management. Gaining such access to network equipments is dangerous. The software embedded in them is complex and should not be secured on the long term using software-only solutions. Existing hardware solutions are presently for example designed to provide redundancy, e. g. by dual management cards, but they do not check if the running configuration can be trusted.

Software tools exist to remotely check a router configuration but such tools cannot guarantee security if integrity of the network equipment, e. g. the router, is partly compromised.

### OBJECT OF THE INVENTION

The object of the invention is to provide a solution to enhance the security of a network equipment, especially in a digital network equipment for example a network equipment in an IP (Internet Protocol) network.

### SUMMARY OF THE INVENTION

This object and others that appear below are achieved by a network equipment comprising a trusted computing environment according to claim 1 and a method for checking the running configuration of a network equipment according to claim 7.

According to one aspect of the invention, the invention provides a solution which is able to detect any configuration change of code or data of the running configuration of a network equipment with respect to a validated state of configuration.

The trusted computing environment (TCE) of this invention comprises a microprocessor card and a secure micro kernel in ROM with an independent clock. The secure micro kernel animates the microprocessor card. This hardware configuration allows for the router self checking, secure micro kernel can be trusted and used for the check.

According to an aspect of the invention the router's running configuration is periodically verified by a signature based solution. The check takes place inside a hardware that can not be corrupted or compromised, a trusted computing environment, like the one for example presented in the US Patent Application US 2005/0257047 A1. The network equipment has its integrity protected by hardware methods of the trusted computing environment.

The running configuration of a network equipment comprises data files and executable code images which are stored on a storage device, e. g. a flash memory. At boot time or dynamically, the code images are loaded into memory and executed and the data is read from the storage device, e. g. the flash memory. The data configuration comprises for example the security configuration or in the case of an Internet protocol network the Internet protocol configuration. The code image comprises executable code. Data and code of the running configuration of the network equipment are usually stored on a non-volatile memory. Message digests such as cryptographic check sums or hashes, for example using the algorithms MD5 or SHA-1, can be computed for the whole configuration of the network equipment. Message digests for part of data and code of the running configuration of the network equipment can also be calculated.

According to an aspect of the invention integrity of the running configuration of the network equipment is checked by comparing the running configuration of the network equipment to a predefined well known and validated configuration. Such configuration has for example been determined externally before deployment of the network equipment. It is a set of code and data files known to work properly on this hardware configuration of the network equipment. It is also known that this code and data file configuration works well on this network equipment at this place in the communication network.

According to a preferred embodiment of the invention the known and validated configuration of the network equipment is stored at a location remote from the network equipment. Preferably such a remote location is a trusted configuration server.

A network equipment according to the invention comprises a trusted computing environment which provides isolation to allow some process to run in a complete and separate environment from other processes and to securely store sensitive and confidential data. The trusted computing environment comprises first message digests which are message digests of at least part of code and data of a validated configuration of the network equipment. The trusted computing environment further comprises means for calculating second message digests of at least part of code and data of the running configuration of the network equipment. The trusted computing environment comprised in the network equipment further comprises means for checking the running configuration of the network equipment by using the first message digests and the second message digests. The second message digests of the running configuration of the network equipment are verified against the first message digests of the validated configuration.

According to a preferred embodiment of the invention the trusted computing environment comprises cryptographic means for verifying the integrity and origin of the first message digests. The cryptographic means are adapted to verify a digital signature. For the verification of the digital signatures a public key is used which is the corresponding key to a private key with which the digital signatures have been generated. For this an asymmetric encryption algorithm with a public private key pair is used.

According to a preferred embodiment of the invention the trusted computing environments performs the step of checking the running configuration of the network equipment at regular intervals. The trusted computing environment will regularly verify the first message digests of the valid configuration against second message digests of the files currently used, being currently executed, by the network equipment. The second message digests are for example - according do one embodiment of the invention - calculated just before comparing them to the first message digests.

According to a preferred embodiment of the invention the public certificate comprising the public key for decrypting the digital signatures of the first message digests is stored in a protected way inside the trusted computing environment. It has been stored during the deployment of the network equipment and can not be removed or modified by an attacker.

According to another embodiment of the invention the network equipment computes the second message digests of the running state of the network equipment at regular intervals. The running state of the network equipment comprises data and code images which have been loaded and used from a storage device, e. g. flash memory. The results are second message digests of a snapshot of the running configuration.

According to a highly preferred embodiment of the invention the network equipment comprises means for requesting the first message digests from a remote location and means for receiving the first message digests from that remote location. The remote location is preferably a configuration server where the known and validated configuration of the network equipment is stored. In the configuration server the first message digests are preferably also stored and can be transmitted to the network equipment. The first message digests are preferably signed using a private key at the remote location, e. g. the a configuration server. The integrity and origin of the first message digests can then be verified in a trusted computing environment of the network equipment. The verification uses the public key corresponding to the private key used at the remote location.

According to another embodiment of the invention the steps of requesting and receiving these first message digests from the remote location and checking the running configuration of the network equipment are optionally done at regular intervals. The network equipment and the method can be configured to perform the steps of requesting and receiving these first message digests from the remote location and checking the running configuration of the network equipment at regular intervals or not.

According to another embodiment of the invention the network equipment, particularly the trusted computing environment of the network equipment, is adapted to send at regular intervals a cryptographically signed heartbeat message to the remote location or a second remote location. The cryptographically signed heartbeat message is signed using a private key inside the trusted computing environment. The signature is verified at the remote location or the second remote location using a public key of the trusted computing environment, which is comprised within the network equipment.

According to an aspect of the method for checking the running configuration of a network equipment the running configuration of the network equipment is verified against a validated configuration of the network equipment by using the first message digests and second message digests. The first message digests are message digests of at least a part of code and data of a validated configuration of the network equipment. The second message digests are message digests of at least part of code and data of a running configuration of the network equipment. The method verifies the set of first message digests of the valid configuration of the network equipment against the message digests of the files currently used and executed by the network equipment. According to a preferred embodiment of the invention the method further comprises the step of cryptographically verifying within the trusted computing environment the integrity and origin of the first message digests. The first message digests are signed by a cryptographic signature. For the cryptographic signatures, preferably an algorithm with a public private key pair is used. The cryptographic signature is checked by the trusted computing environment using a public key. The public key used corresponds to the private key with which the signatures have been generated. The public certificate comprising the public key of the entity having produced the signature is protected inside the trusted computing environment. It has been stored during the deployment of the network equipment and can not be removed or modified by an attacker.

According to a preferred embodiment of the invention the step of checking the running configuration of the network equipment is performed at regular intervals. Periodically the second message digests of the running state of the network element are calculated. A running state comprises the data and code images which have been loaded and used from a storage device, e. g. flash memory. The result is a snapshot of the running configuration.

The running configuration second message digests are then verified against the first message digests.

According to a preferred embodiment of the invention the first message digests are requested from a remote location and the first message digests are received at the network equipment from said remote location. Preferably the first message digests received from the remote location have been signed at the remote location using a private key. The cryptographic signatures of the first message digests can then be verified using the corresponding public key stored at the trusted computing environment. This allows for cryptographically verifying within the trusted computing environment the integrity and origin of the first message digests received from the remote location. The public certificate comprising the public key is stored in a protected way inside the trusted computing environment and can not be removed or modified by an attacker.

According to another embodiment of the invention the steps of requesting and receiving these first message digests are performed at regularly intervals. The step of checking the running configuration of the network equipment is also performed at regular intervals. The trusted computing environment regularly computes second message digests of the running state of the network equipment. The result is a snapshot of the running configuration. The running configuration comprises data and code images which have been loaded and used from a storage device, e. g. a flash memory.

According to another embodiment of the invention a reaction is launched if the check of the running configuration fails. For example at least an alarm is send to a network management device.

According to another embodiment of the invention at regular intervals a cryptographically signed heartbeat message is sent to said remote location, e. g. a configuration server, or to a second remote location, e. g. a security level manager. This can be used as a proof that the verification of the running configuration of the network equipment is still functional. The signature of the heartbeat message is produced using a private key within the trusted computing environment. The signature can then be verified at the remote location or the second remote location using the corresponding public key. According to another embodiment of the invention, said heartbeat message is sent to said remote location, e. g. a configuration server and to a second remote location, e. g. a security level manager.

According to a preferred embodiment of the invention the trusted computing environment is a running smart card, preferably equipped with a secure micro kernel.

According to an embodiment of the invention the network equipment is a router, preferably within a digital communication network. In a preferred embodiment of the invention the digital communication network is an Internet protocol (IP) network.

According to an embodiment of the invention the first message digests can be stored within the trusted computing environment. For the check of the running configuration of the network equipment those stored first message digests can then be used. According to an embodiment of the invention the first message digests can additionally be requested and received from the remote location. The stored first message digests are then replaced by the received first message digests.

According to another embodiment of the invention the first message digests are received from the remote location stored and used for a check of the running configuration only once. For a further check of the running configuration, new first message digests have to be received from the remote location.

### BRIEF DESCRIPTION OF THE DRAWINGS

Other characteristics and advantages of the invention will become apparent in the following detailed description of preferred embodiments of the invention illustrated by the accompanying drawings given by way of non limiting illustrations. The same reference numerals may be used in different drawings to identify the same or similar elements.
Figure 1 shows a schematic overview of a network equipment and a configuration server,
Figure 2 shows an overview of the configuration check,
Figure 3 shows a network equipment, e. g. a router, and an initial heartbeat message,
Figure 4, Figure 5 and Figure 6 show an overview of a heartbeat message verification.

### DETAILED DESCRIPTION OF THE INVENTION

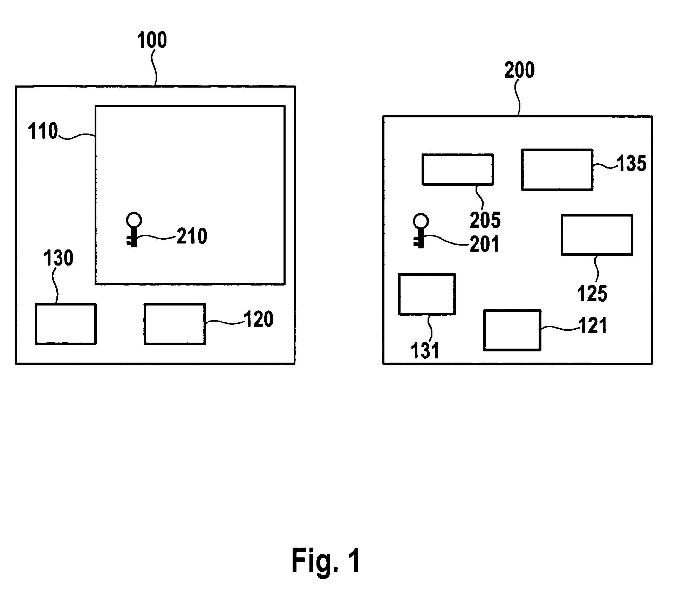

Figure 1 shows a network equipment 100, e. g. a router. The network is a communication network preferably a digital communication network, e. g. an Internet protocol network. The network equipment 100 comprises a trusted computing environment 110, e. g. a running smart card which can be a Java smart card. The trusted computing device offers a secured execution device associated with the network element to perform secured functions. The execution of these functions is isolated and secured from other processes running on the network equipment and therefore these functions cannot be compromised easily by attackers. To achieve improved security one or more generic processors are embedded on the control card which are associated with standard storage devices such flash memory cards to store configurations or security elements from management or control operations. A trusted computing environment is for example described in US 2005/0257047 A1. Stored within the trusted computing environment is a public key 210 for verifying cryptographic signatures. Corresponding to the public key 210 is a private key 201. Signatures encrypted using the private key 201 can be verified using the public key 210. The network equipment 100 also comprises code 120 and data 130 of the running configuration of the network equipment.

Also shown in figure 1 is a remote location 200, preferably a trusted configuration server. The trusted configuration server 200 comprises code 121 and data 131 of a validated configuration of the network equipment 100. It preferably also comprises first message digests 125 of the code 121 of a validated configuration of the network equipment 100 and first message digests 135 of data 131 of a validated configuration of the network equipment 100. The trusted configuration server also comprises a private key 201 to cryptographically sign the first message digests 125 and 135. The cryptographic signature using the private key 201 is done within the means 205 for cryptographically signing the first message digests 125 and 135. The code 121 and data 131 validated for the network equipment 100 is called the valid configuration of the network equipment 100. The validated configuration of the network equipment 100 is signed in the means 205 using the private key 201 of the configuration server 200. At boot time the network equipment 100 loads several binary images into the memory before executing them. The binary images in the memory to be executed are the running configuration of the network equipment 100. A signature can be computed for each of these code 121 and data 131 files. The trusted configuration server 200 is a trusted computing environment so the private key 201 of the trusted configuration server is in a save place.

According to another embodiment of the invention, the network equipment 100 is provided the validated data 131 and validated code 121 during the deployment of the network equipment 100. After integration verification the network equipment 100 has validated data 131 and validated code 121. It is therefore known within the network equipment 100 what it is a valid configuration 131 and 121.

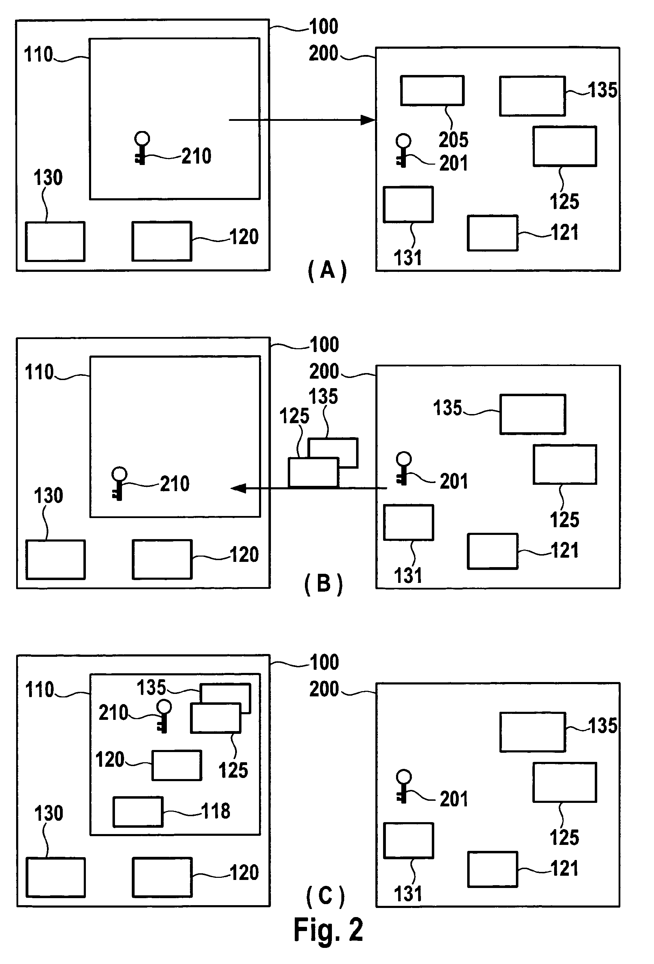

In figure 2A the request of the first message digests from the network equipment 100 to the trusted configuration server 200 is shown. On a regular basis the trusted computing environment 110 of the network equipment, preferably a router, 100 verifies that the whole network equipment's 100 integrity is intact. The trusted computing environment 110 requests the trusted configuration server 200 for the first message digests 125, 135 of each vital code 121 and data 131 parts which are needed for the network equipment's 100 integrity checking.

Shown in figure 2B is the server answering with the first message digests 125, 135. The first message digests 125 and 135 are cryptographically signed using the private key 201 of the trusted configuration server 200. The network equipment 100 receives the first message digests 125 and 135, which are cryptographically signed.

Shown in figure 2C is the check of the running configuration of the network equipment 100 by using the first message digests 125 and 135 and the second message digests. Inside the trusted computing environment 1 10 for each of the vital parts of the running configuration of the network equipment 100 which comprises code 120 and data 130 second message digests are computed. Then the first message digests of those vital parts 120 and 130 are verified against he locally computed second message digests. If one of those comparisons shows that one of the message digest is not valid it means that a modification has been made to the related part and that the network equipment's integrity is no longer assured.

The trusted computing environment 110 is based on a principle that the executable is running independently from the main software of the network equipment 100 and can not be stopped or altered even using known physical means.

Examples for algorithms that can be used for calculating the first and second message digests are for example SHA-1 or MD5 or any other message digest algorithms.

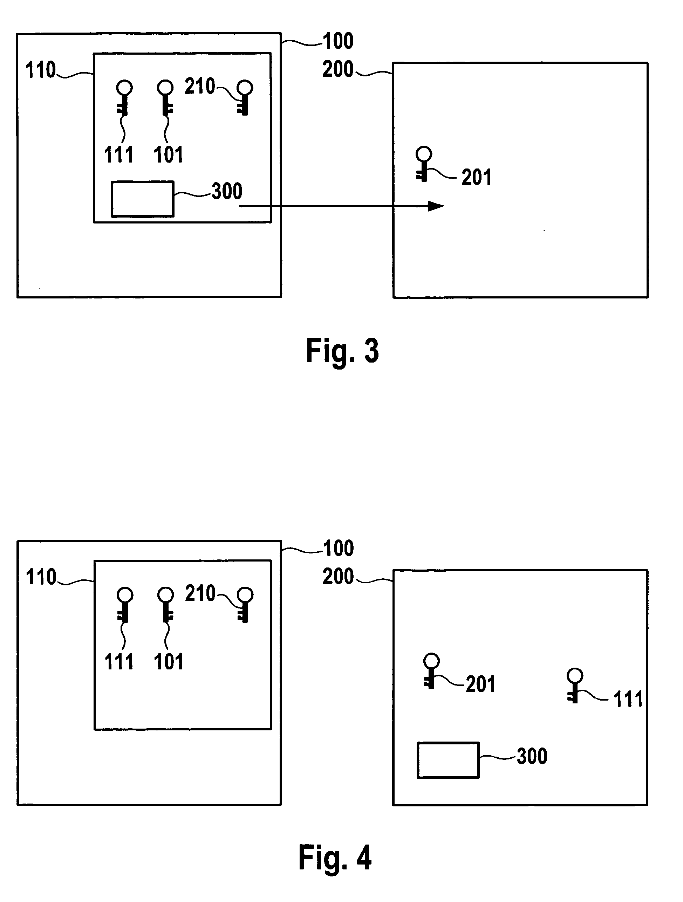

According to a preferred embodiment of the invention a signed heartbeat message is sent to the configuration server 200 or to another remote location, e. g. a management server, to detect an intentional isolation of the network equipment 100 from the management network. An example of a method for generating heartbeat messages is shown in figures 3 to 6. The trusted computing environment 110 of the network equipment 100 generates internally a unique public key 110 and private key 101 pair. It is used to avoid a malicious attacker to fake the identity of the network equipment 100. This could be used to generate false heartbeat message. If the network equipment 100 has two trusted computing environments 110, two different public key pairs will be generated. One of them can be used to avoid the fake of identity Additionally or alternatively the two corresponding public keys can be allowed by the remote heartbeat checker. This is especially useful for router configuration with dual management - including TCE - cards.

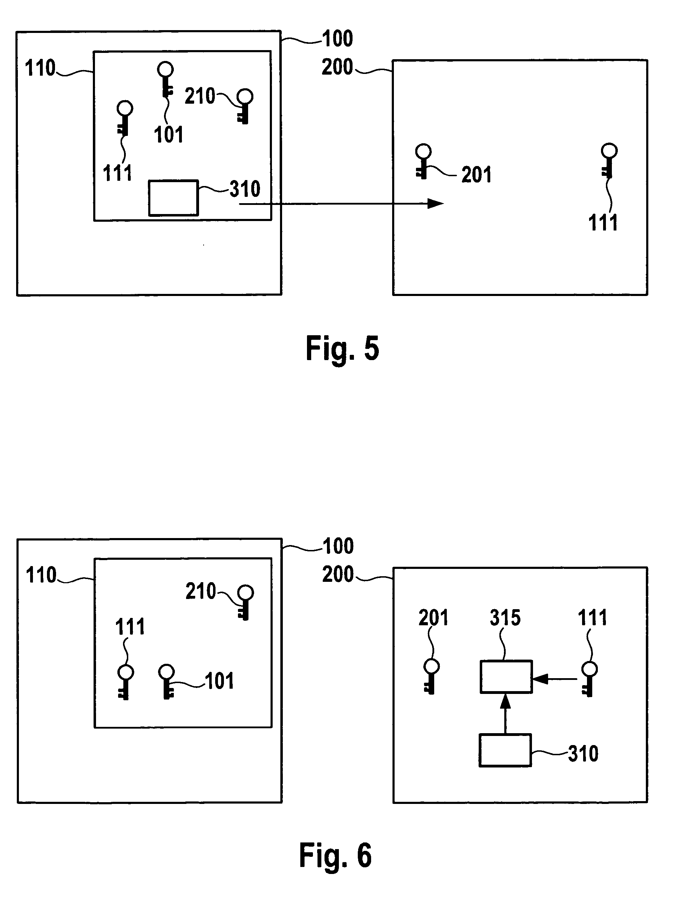

Figure 3 shows the generation of a first and unique initial heartbeat message 300. The initial heartbeat message makes the public key 111 of the trusted computing environment 110 known to the trusted configuration server 200. The public key 111 could also be made known to the trusted configuration server 200 "offline", before the router deployment. The public key of the trusted computing environment 110 is encrypted using the public key 210 of the configuration management server 200. This assures that only the configuration server 200 will be able to decrypt the public key 111 of the trusted computing environment 110. Shown in figure 4 is the trusted configuration server 200 which has already received the initial heartbeat message 300 comprising the public key 111 of the trusted computing environment 110. The public key 111 has been generated by decrypting the initial heartbeat message 300 using the private key 201. After that the heartbeat message 310 itself is periodically generated within the trusted computing environment 110 and periodically sent to the configuration server 200. The heartbeat message 310 comprises a signature which has been generated using the private key 101 of the trusted computing environment 110. The heartbeat message 310 also comprises a time stamp to protect the method against replay attacks. The generation of the heartbeat message is shown in figure 5.

In figure 6 the heartbeat message 310 has been received by the configuration server 200. Using means 315 and the public key 111 the heartbeat message is decrypted. As the private key 101 of the trusted computing environment 110 is protected inside the trusted computing environment 110 it is impossible for an attacker to generate a valid heartbeat message 310.

The initial heartbeat message 300 comprises additionally a so called magic value. The magic value is a way to detect that the decryption is successful. The magic value is important to be able to detect a failing decryption, that is the magic value after decryption is incorrect. The magic value is also important to detect a failing comparison between the reference message digest and the local message digest, an integrity problem. If the magic value is correct at the beginning and the end of the encrypted message, the reference message digests are correct. So if the comparison fails, the only possible reason is because the local message digests are incorrect, i. e. integrity problem.

In an embodiment of the invention the messages in between the network equipment 100 and the configuration server 200 can be combined in one single message per direction. For example the request for first message digests 125 and 135 and the heartbeat message 310 can be combined in a unique message.

The entity receiving the initial heartbeat message 300 and the heartbeat message 310 can be the configuration server 200 - as shown in the example above. It is also possible to send the heartbeat message 310 and the initial heartbeat message 300 to a second remote location which can for example be a management server which is different from the configuration server 200. The management server should then also be a server trusted by the network equipment 100.

The reaction to a failed integrity check of the network equipment 100 is preferably configurable. Policies can range from less to more aggressive for example. One possibility is to send an alarm to an alarm server. For this implementation the IP UDP (Internet Protocol User Datagram Protocol) stack should be trustable it can either be inside the trusted computing environment 110 or has a valid message digest. Another possibility to react to a failed integrity check could be to reload a validated configuration, e. g. a certified configuration, or a validated binary image, e. g. a certified binary image, from the trusted configuration server 200 using a TLS/SSL (Transport Layer Security / Secure Sockets Layer) or IPsec (Internet Protocol Security) tunnel. The reloaded configuration can then be used for the network equipment 100. If the router has two trusted computing environments 110 one of them can reload the certified configuration while the other one hosts the running configuration.

This solution delegates the root of trust of the network equipment 100 inside hardware via a trusted component 110. Then periodically and additionally at boot time the integrity of the network equipment's 100 running configuration, code 120 and data 130 can be verified. This principle can be called in a critical environment "defence in depth". This means that several barriers have to be broken before corrupting a system. Having the root password of the network equipment 100 would not be enough to corrupt it. The secret key 111 generated inside the trusted computing environment 110 is only used for the heartbeat message 310 to sign the heartbeat message 310. A network equipment 100 can therefore have two trusted computing environments 110. This doesn't inhibit receiving messages, as the secret key within the trusted computing environments 110 is not used for deciphering received messages.

## Claims

1. Network equipment (100) comprising a trusted computing environment (110), the trusted computing environment (110) providing isolation to allow some process to run in a complete and separate environment from other processes and to securely store data, **characterized by** the trusted computing environment (110) comprising
first message digests (125, 135) which are message digests of at least part of code (121) and data (131) of a validated configuration of the network equipment (100),
means for calculating second message digests of at least part of code (120) and data (130) of the running configuration of the network equipment (100), and
means for checking the running configuration of the network equipment (100) using the first message digests (125, 135) and the second message digests.

2. Network equipment (100) according to claim 1, further **characterized by** the trusted computing environment (110) comprising cryptographic means for verifying the integrity and origin of the first message digests (125, 135).

3. Network equipment (100) according to claim 1 or 2, further
**characterized by**
said trusted computing environment (110) being adapted to perform at regular intervals the step of checking the running configuration of the network equipment (100).

4. Network equipment (100) according to claim 1, 2 or 3, further
**characterized by**
means for requesting the first message digests (125, 135) from a remote location (200), and
means for receiving the first message digests (125, 135) from said remote location (200).

5. Network equipment (100) according to claim 4, **characterized by**
being adapted to send at regular intervals a cryptographically signed heartbeat message (310) to said remote location (200) and/or a second remote location.

6. Network equipment (100) according to claim 4 or 5, further **characterized by** being adapted to perform at regular intervals the steps of requesting and receiving said first message digests (125, 135) from said remote location (200) and
said trusted computing environment (110) being adapted to perform at regular intervals the step of checking the running configuration of the network equipment (100).

7. Method for checking the running configuration of a network equipment (100), whereas the network equipment (100) comprises a trusted computing environment (110), the trusted computing environment (110) providing isolation to allow some process to run in a complete and separate environment from other processes and to securely store data, the trusted computing environment (110) comprising first message digests (125, 135), said first message digests (125, 135) being message digests of at least part of code (121) and data (131) of a validated configuration of the network equipment (100), the method comprising the steps of
calculating within said trusted computing environment (110) second message digests of at least part of code (120) and data (130) of a running configuration of the network equipment (100),
checking within the trusted computing environment (110) the running configuration of the network equipment (100) using the first message digests (125, 135) and the second message digests.

8. Method according to claim 7, further comprising the step of cryptographically verifying within the trusted computing environment (110) the integrity and origin of the first message digests (125, 135).

9. Method according to claim 7 or 8, **characterized by**
performing at regular intervals the step of checking the running configuration of the network equipment (100) within the trusted computing environment (110).

10. Method according to claim 7, 8 or 9, further comprising the steps of requesting the first message digests (125, 135) from a remote location (200), and
receiving said first message digests (125, 135) from said remote location (200).

11. Method according to claim 10, further **characterized by** the step of sending at regular intervals a cryptographically signed heartbeat message (310) to said remote location (200) and/or to a second remote location.

12. Method according to claim 10 or 11, **characterized by**
performing at regular intervals the steps of requesting and receiving said first message digests (125, 135) from said remote location (200) and checking the running configuration of the network equipment (100) within the trusted computing environment (110).

## Amended claims

### Amended claims in accordance with Rule 137(2) EPC.

**1.** Network equipment (100) comprising a trusted computing environment (110), the trusted computing environment (110) providing isolation to allow some process to run in a complete and separate environment from other processes and to securely store data, **characterized by** the trusted computing environment (110) comprising
first message digests (125, 135) which are message digests of at least part of code (121) and data (131) of a validated configuration of the network equipment (100),
means for calculating second message digests of at least part of code (120) and data (130) of a running configuration of the network equipment (100), and
means for checking the running configuration of the network equipment (100) using the first message digests (125, 135) and the second message digests.

**2.** Network equipment (100) according to claim 1, further **characterized by** the trusted computing environment (110) comprising cryptographic means for verifying the integrity and origin of the first message digests (125, 135).

**3.** Network equipment (100) according to claim 1 or 2, further
**characterized by**
said trusted computing environment (110) being adapted to perform at regular intervals the step of checking the running configuration of the network equipment (100).

**4.** Network equipment (100) according to claim 1, 2 or 3, further
**characterized by**
means for requesting the first message digests (125, 135) from a remote location (200), and
means for receiving the first message digests (125, 135) from said remote location (200).

**5.** Network equipment (100) according to claim 4, **characterized by** being adapted to send at regular intervals a cryptographically signed heartbeat message (310) to said remote location (200) and/or a second remote location.

**6.** Network equipment (100) according to claim 4 or 5, further **characterized by** being adapted to perform at regular intervals the steps of requesting and receiving said first message digests (125, 135) from said remote location (200) and
said trusted computing environment (110) being adapted to perform at regular intervals the step of checking the running configuration of the network equipment (100).

**7.** Method for checking a running configuration of a network equipment (100), whereas the network equipment (100) comprises a trusted computing environment (110), the trusted computing environment (110) providing isolation to allow some process to run in a complete and separate environment from other processes and to securely store data, the trusted computing environment (110) comprising first message digests (125, 135), said first message digests (125, 135) being message digests of at least part of code (121) and data (131) of a validated configuration of the network equipment (100), the method comprising the steps of
calculating within said trusted computing environment (110) second message digests of at least part of code (120) and data (130) of a running configuration of the network equipment (100),
checking within the trusted computing environment (110) the running configuration of the network equipment (100) using the first message digests (125, 135) and the second message digests.

**8.** Method according to claim 7, further comprising the step of cryptographically verifying within the trusted computing environment (110) the integrity and origin of the first message digests (125, 135).

**9.** Method according to claim 7 or 8, **characterized by**
performing at regular intervals the step of checking the running configuration of the network equipment (100) within the trusted computing environment (110).

**10.** Method according to claim 7, 8 or 9, further comprising the steps of requesting the first message digests (125, 135) from a remote location (200), and
receiving said first message digests (125, 135) from said remote location (200).

**11.** Method according to claim 10, further **characterized by** the step of sending at regular intervals a cryptographically signed heartbeat message (310) to said remote location (200) and/or to a second remote location.

**12.** Method according to claim 10 or 11, **characterized by**
performing at regular intervals the steps of requesting and receiving said first message digests (125, 135) from said remote location (200) and
checking the running configuration of the network equipment (100) within the trusted computing environment (110).
